# DEMANDE DE BREVET EUROPEEN

(11) **EP 2 306 579 A1**
(43) Date de publication de la demande: **06.04.2011**
(21) Numéro de dépôt: 10173758.3
(22) Date de dépôt: 23.08.2010
(51) Int. Cl.: H01M 10/04, H01M 10/0525, H01M 10/0562, H01M 10/0585, H01M 2/02, H01M 6/40, H01M 4/38, H01M 4/485, H01M 4/525, H01M 4/58, H01M 4/587, H01M 4/66, H01M 4/04

(54) **Procédé de formation d'une batterie lithium-ion en couches minces**

(30) Priorité: 28.09.2009 FR 0956677
(71) Demandeur: STMicroelectronics (Tours) SAS, 37100 Tours (FR)
(72) Inventeur: Bouillon, Pierre, 37230, LUYNES (FR)
(74) Mandataire: de Beaumont, Michel

(57) **Abrégé**

L'invention concerne un procédé de formation d'une batterie de type lithium-ion, comprenant les étapes successives suivantes :
(a) former, dans un substrat (10), une tranchée ;
(b) déposer successivement et de façon conforme, un empilement (14) comprenant une couche de collecteur de cathode (16), une couche de cathode (18), une couche d'électrolyte (20) et une couche d'anode (22), cet empilement ayant une épaisseur inférieure à la profondeur de la tranchée ;
(c) former, sur la structure, une couche de collecteur d'anode (26) remplissant l'espace restant dans la tranchée ; et
(d) réaliser une planarisation de la structure pour faire apparaître la surface supérieure de la couche de collecteur de cathode (16).

## Description

### Domaine de l'invention

La présente invention concerne un procédé de formation d'une batterie de type lithium-ion en couches minces.

### Exposé de l'art antérieur

Les batteries de type lithium-ion ont l'avantage de comporter un électrolyte solide non-inflammable qui présente, de plus, une conductivité ionique bonne sur une grande gamme de températures. De telles batteries pourraient avantageusement être utilisées dans des dispositifs électroniques mobiles tels que les téléphones ou ordinateurs portables.

Pour réaliser des batteries lithium-ion en couches minces, typiquement des batteries ayant des dimensions de 2,5 x 2,5 cm, il est connu d'utiliser des techniques de pulvérisation au travers d'un pochoir ("shadow mask" en anglais). Ces techniques consistent à placer un pochoir ou masque au-dessus d'un support et à pulvériser, au travers de ce masque, les différentes couches constitutives de la batterie.

Cependant, pour une production à grande échelle de batteries de type lithium-ion en couches minces, l'utilisation de pochoirs implique un coût relativement élevé. En effet, à chaque pulvérisation mettant en jeu un masque, le composant pulvérisé se dépose également sur le masque. Ainsi, entre chaque utilisation du masque, il est nécessaire d'éliminer et de recycler les différentes couches déposées sur ce masque.

Les techniques de formation de batteries par pulvérisation au travers d'un pochoir ont également l'inconvénient de ne pas être adaptées pour former des batteries ayant des dimensions plus faibles (inférieures à 3 mm de côté), des problèmes d'alignement des masques apparaissant pour de telles dimensions. Or, ces batteries pourraient avantageusement être utilisées comme batteries de sauvegarde pour sauvegarder des données clefs dans des mémoires en cas de défaillance d'une batterie principale.

Pour former des batteries de type lithium-ion de petites tailles, on pourrait penser à adapter des techniques de lithographie bien connues et maîtrisées dans le domaine des circuits intégrés. Cependant, ces techniques coûtent relativement cher si elles sont appliquées sur des grandes surfaces de substrat. De plus, les procédés de lithographie nécessitent l'utilisation de résines que l'on grave par des traitements humides (généralement des mélanges aqueux à base de solvants) qui provoqueraient des réactions chimiques avec les couches très réactives à base de lithium de la batterie. Ces techniques ne sont donc pas adaptées à la formation de batteries de type lithium-ion.

Ainsi, un besoin existe d'un procédé permettant de former des batteries de type lithium-ion de petites dimensions en technologie de couches minces, relativement bon marché, et adapté à la présence des matériaux très réactifs constitutifs de ces batteries.

### Résumé

Un objet d'un mode de réalisation de la présente invention est de prévoir un procédé permettant de former une batterie de type lithium-ion planaire en couches minces, compatible avec la réactivité des matériaux présents dans ces batteries.

Un autre objet d'un mode de réalisation de la présente invention est de prévoir un procédé permettant de former des batteries de type lithium-ion planaire en couches minces de petites dimensions à un coût raisonnable.

Ainsi, un mode de réalisation de la présente invention prévoit un procédé de formation d'une batterie de type lithium-ion, comprenant les étapes successives suivantes :
a) former, dans un substrat, une tranchée ;
b) déposer successivement et de façon conforme, un empilement comprenant une couche de collecteur de cathode, une couche de cathode, une couche d'électrolyte et une couche d'anode, cet empilement ayant une épaisseur inférieure à la profondeur de la tranchée ;
c) former, sur la structure, une couche de collecteur d'anode remplissant l'espace restant dans la tranchée ; et
d) réaliser une planarisation de la structure pour faire apparaître la surface supérieure de la couche de collecteur de cathode.

Selon un mode de réalisation de la présente invention, le procédé comprend en outre, après l'étape (d) les étapes suivante :
former une couche de protection sur la structure et définir, dans ladite couche de protection, une première ouverture traversante au-dessus de la couche de collecteur d'anode et une seconde ouverture traversante au-dessus de la couche de collecteur de cathode ; et
former des première et seconde régions conductrices, respectivement, dans la première ouverture et dans la seconde ouverture et sur une partie de la couche de protection.

Selon un mode de réalisation de la présente invention, le procédé comprend en outre une étape de formation d'un premier contact sur la première région conductrice et d'un second contact sur la seconde région conductrice.

Selon un mode de réalisation de la présente invention, le procédé comprend en outre, avant l'étape (c), une étape de formation d'une couche d'accrochage.

Selon un mode de réalisation de la présente invention, la couche de collecteur d'anode est formée par croissance électrolytique à basse température sur la couche d'accrochage, la couche d'accrochage étant en un empilement de titane et de cuivre.

Selon un mode de réalisation de la présente invention, le substrat est en silicium ou en oxyde de silicium, la couche de collecteur de cathode est en titane, en tungstène, en molybdène, en tantale, en platine ou en un alliage ou un empilement de ces matériaux, la couche de cathode est en oxysulfure de titane et de lithium (LiTiOS) ou en oxyde de cobalt et de lithium (LiCoO₂) ou tout autre matériau d'insertion de lithium utilisable comme cathode dans les batteries de type lithium-ion, la couche d'électrolyte est en oxynitrure phosphoré de lithium (LiPON), la couche d'anode est en silicium, en germanium, en carbone ou en un empilement ou en un alliage de ces matériaux et la couche de collecteur d'anode est en cuivre.

Selon un mode de réalisation de la présente invention, la couche de collecteur de cathode, la couche de cathode, la couche d'électrolyte et la couche d'anode sont formées par pulvérisation en phase vapeur.

Selon un mode de réalisation de la présente invention, la couche de protection est constituée d'un empilement d'une première couche en une céramique, en Al₂O₃, en SiN, ou en ZrO₂ et d'une seconde couche en SiO₂.

Selon un mode de réalisation de la présente invention, la tranchée a une profondeur comprise entre 5 et 30 µm, la couche de collecteur de cathode a une épaisseur comprise entre 100 et 500 nm, la couche de cathode a une épaisseur comprise entre 1 et 10 µm, la couche d'électrolyte a une épaisseur comprise entre 1 et 3 µm et la couche d'anode a une épaisseur comprise entre 10 et 800 nm.

Un mode de réalisation de la présente invention prévoit une batterie de type lithium-ion, comprenant un substrat comprenant une tranchée ; une couche de collecteur de cathode le long des parois et du fond de la tranchée et sur le substrat ; un empilement d'une couche de cathode, d'une couche d'électrolyte, d'une couche d'anode et d'une couche de collecteur d'anode formé le long des parois et du fond de la tranchée, sur la couche de collecteur de cathode, l'empilement remplissant la tranchée ; et une couche de protection s'étendant sur la couche isolante et sur l'empilement, des première et seconde ouvertures traversantes étant formées dans ladite couche de protection, respectivement au-dessus de la couche de collecteur d'anode et au-dessus de la couche de collecteur de cathode.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
les figures 1A à 1E illustrent des résultats d'étapes d'un procédé de formation d'une batterie de type lithium-ion planaire en couches minces selon un premier mode de réalisation de la présente invention ;
les figures 2E et 2F illustrent des résultats d'étapes d'un procédé de formation d'une batterie de type lithium-ion planaire en couches minces selon un deuxième mode de réalisation de la présente invention ; et
les figures 3D à 3G illustrent des résultats d'étapes d'un procédé de formation d'une batterie de type lithium-ion planaire en couches minces selon un troisième mode de réalisation de la présente invention.

Par souci de clarté, de mêmes éléments ont été désignés par de mêmes références dans les diverses figures et, de plus, comme cela est habituel dans la représentation de composants de petites dimensions à couches minces, les diverses figures ne sont pas tracées à l'échelle.

### Description détaillée

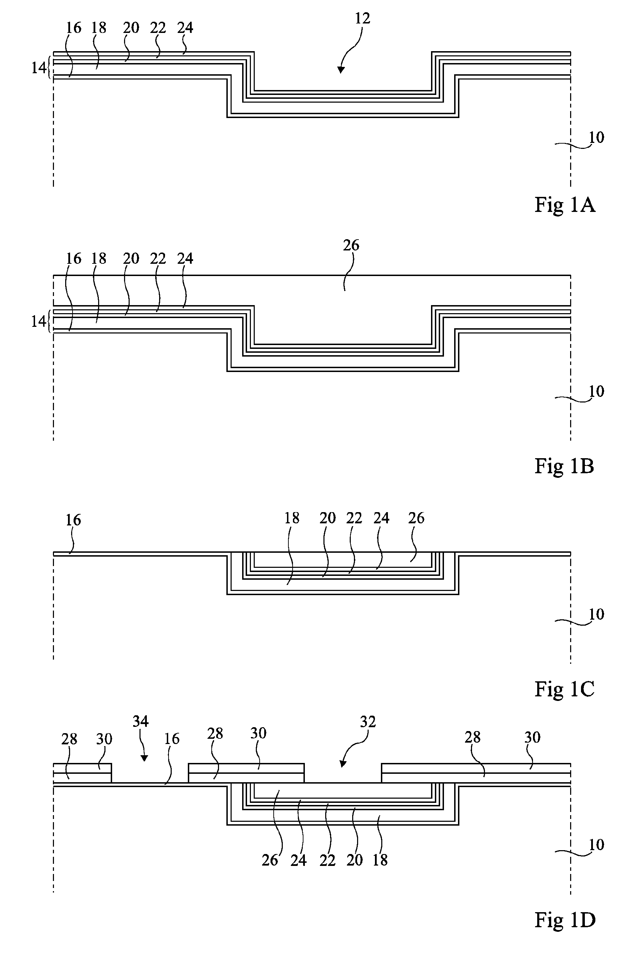

Les figures 1A à 1E illustrent des résultats d'étapes d'un mode de réalisation d'un procédé de formation d'une batterie de type lithium-ion planaire (les deux contacts d'électrode étant formés en surface du dispositif), en couches minces.

A l'étape illustrée en figure 1A, on part d'une structure comprenant un substrat 10 dans lequel est formée une tranchée 12. A titre d'exemple, le substrat 10 peut être en silicium, en du silicium présentant une résistivité élevée ou encore en oxyde de silicium. La tranchée 12 peut être obtenue par exemple par lithographie, à l'aide d'une résine dans laquelle on forme au préalable un motif adapté. De préférence, la tranchée 12 a une profondeur comprise entre 5 et 30 µm et des dimensions en surface du substrat comprises entre 700 et 900 µm.

Un empilement 14 des différentes couches constitutives d'une batterie de type lithium-ion est formé sur la surface supérieure du substrat 10 et sur le fond et les parois de la tranchée 12. L'empilement 14 peut être formé par une succession de pulvérisations en phase vapeur (PVD).

L'empilement 14 comprend les couches ci-après.
- Une première couche 16 formant un collecteur de cathode. Cette couche peut être, à titre d'exemple, en titane, en tungstène, en molybdène, en tantale, en platine ou en un alliage ou un empilement de ces matériaux et avoir une épaisseur comprise entre 100 et 500 nm.
- Une deuxième couche 18 formant la cathode de la batterie, constituée d'un matériau tel que du LiTiOS (oxysulfure de titane et de lithium) ou du LiCoO₂ (oxyde de cobalt et de lithium), ayant une épaisseur comprise entre 1 et 10 µm. Plus généralement, la couche 18 pourra être en tout matériau d'insertion de lithium utilisable comme cathode dans les batteries de type lithium-ion.
- Une troisième couche 20 formant l'électrolyte de la batterie, constituée par exemple de LiPON (oxynitrure phosphoré de lithium) ou de tout autre matériau propre à former un électrolyte d'une pile lithium-ion. La troisième couche 20 a une épaisseur comprise entre 1 et 3 µm.
- Une quatrième couche 22 formant l'anode de la batterie, par exemple en silicium, en germanium, en carbone ou en un empilement ou un alliage de ces matériaux. La quatrième couche a une épaisseur comprise entre 10 et 800 nm.

Ainsi, l'empilement 14 formant la partie active de la batterie de type lithium-ion peut avoir une épaisseur comprise entre 5 et 15 µm, cette épaisseur étant inférieure à la profondeur de la tranchée 12.

Sur l'empilement 14 est formée une cinquième couche 24 formant une couche d'accrochage pour le collecteur d'anode ("seed layer" en anglais). A titre d'exemple, cette couche peut être en un alliage de titane et de cuivre. Cette couche forme également une barrière protectrice pour les couches inférieures de l'empilement, et principalement pour les couches 18 et 20 constituées de composés de lithium particulièrement réactifs. A titre d'exemple, la couche d'accrochage 24 peut avoir une épaisseur comprise entre 100 et 300 nm. On notera que la couche d'accrochage 24 pourra ne pas être prévue si le matériau formant la couche de collecteur d'anode est adapté à être formé directement sur l'anode de la batterie.

On notera que, en figure 1A et dans toutes les figures qui suivent, une seule cellule élémentaire formant une batterie de type lithium-ion est représentée. On comprendra que de nombreuses batteries pourront être formées les unes à côté des autres sur le substrat 10. A titre d'exemple, les régions actives de deux batteries adjacentes peuvent être séparées d'une distance inférieure à 1 mm, par exemple comprise entre 200 et 500 µm. On notera que le chemin de découpe de chaque batterie élémentaire pourra avoir une largeur inférieure à 100 µm.

A l'étape illustrée en figure 1B, on a formé, par une croissance électrolytique à basse température (pour ne pas provoquer de réaction des couches formées de composés de lithium) et sur la couche d'accrochage 24, une couche de collecteur d'anode 26, par exemple en cuivre. La croissance électrolytique est prévue de façon que le cuivre 26 remplisse complètement l'espace restant dans la tranchée 12 et se forme également en surface de l'ensemble de la structure.

A l'étape illustrée en figure 1C, on a réalisé une planarisation ou polissage de la structure de la figure 1B pour éliminer toutes les couches situées au dessus de la surface supérieure de la couche de collecteur de cathode 16 et ainsi laisser apparaître cette couche.

Pour réaliser cette planarisation, on pourra utiliser tout procédé de type polissage mécano-chimique (CMP) ou purement mécanique connu. De plus, pour éliminer les différentes couches de l'empilement 14, excepté la couche 16, on pourra utiliser successivement différents composants de planarisation (slurry). Pour ne pas faire réagir les matériaux des couches 20 et 22, on utilisera des composés de planarisation non aqueux. De façon classique, l'arrêt de la planarisation sur la couche de collecteur de cathode 16 pourra être déterminé en détectant une variation d'un couple moteur ou de courants de Foucault, ou par contrôle optique in situ.

A l'étape illustrée en figure 1D, on a formé une couche de protection isolante sur l'ensemble du dispositif. Dans l'exemple représenté, cette protection est constituée d'un empilement de deux couches 28 et 30. On notera que la couche de protection pourra être formée d'une unique couche en un matériau adapté. L'empilement 28/30 a pour but de protéger les portions de matériaux réactifs de l'empilement 14 qui sont, à l'étape de la figure 1C, en contact avec l'air (couches 18 et 20). Pour cela, la première couche 28 déposée sur l'ensemble de la structure peut être une céramique, de l'Al₂O₃, du SiN, ou du ZrO₂. La couche 30, quant à elle, est une couche de passivation qui permet de compléter le premier niveau de barrière à l'humidité assurée par la couche 28, mais cette couche 30 n'est pas nécessairement une barrière à la diffusion du lithium. A titre d'exemple, la couche 30 pourra être en SiO₂. De préférence, la couche 28 a une épaisseur de quelques dizaines de nanomètres et la couche 30 à une épaisseur de l'ordre de 1 µm.

Une première ouverture traversante 32 est formée dans l'empilement 28/30, au-dessus d'une portion de la couche de collecteur d'anode 26. L'ouverture 32 permet de prendre contact sur la couche de collecteur d'anode 26. Une seconde ouverture traversante 34 est formée dans l'empilement 28/30, au-dessus d'une portion de la couche de collecteur de cathode 16, en surface du substrat 10. L'ouverture 34 permet de prendre contact sur la couche de collecteur de cathode 16.

De préférence, les ouvertures 32 et 34 présentent une largeur comprise entre 50 et 500 µm. A titre d'exemple, les ouvertures 32 et 34 peuvent être formées par lithographie, l'utilisation d'un tel procédé étant rendue possible du fait de la présence de l'empilement 28/30 de protection des couches actives de la batterie.

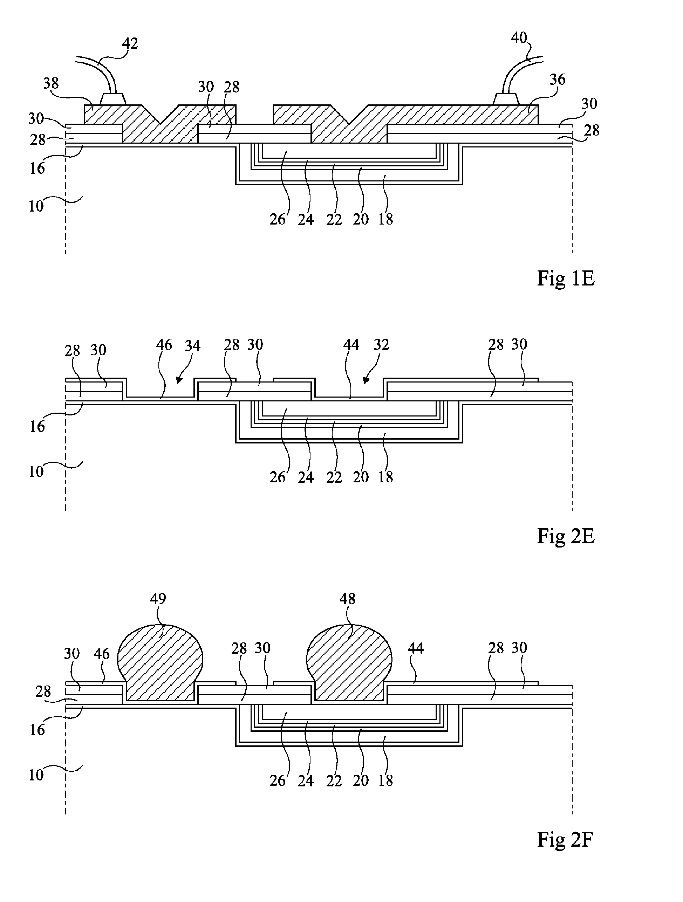

A l'étape illustrée en figure 1E, on a formé une première métallisation 36 au niveau de l'ouverture 32 et sur une région de l'empilement 28/30. La métallisation 36 forme une reprise de contact sur la région de collecteur d'anode 26. Une seconde métallisation 38 est formée au niveau de l'ouverture 34 et sur une région de l'empilement 28/30 pour former une reprise de contact sur la région de collecteur de cathode 16.

A titre d'exemple, les métallisations 36 et 38 peuvent être formées par un dépôt pleine plaque d'une couche métallique ou conductrice puis par gravure de cette couche de façon adaptée. Les métallisations 36 et 38 peuvent être en un empilement d'aluminium et de tantale, d'aluminium et de titane, ou encore d'aluminium et de nitrure de tantale.

Sur cette structure est formée une encapsulation de l'ensemble du dispositif (non représentée), par exemple en déposant, sur l'ensemble de la structure, une couche épaisse d'oxyde de silicium, de BCB, de résine, et plus généralement d'une résine photosensible polymérisable. Deux ouvertures traversantes sont ensuite formées dans la couche d'encapsulation pour permettre la formation de premier et second contacts. Un premier contact 40 est formé, au travers de l'encapsulation, sur la métallisation 36 et un second contact 42 est formé, au travers de l'encapsulation, sur la métallisation 38. Dans l'exemple représenté, les contacts 40 et 42 sont à titre d'exemple formés par un procédé de type soudure par fil (wire-bonding).

On obtient ainsi une batterie élémentaire de type lithium-ion planaire formée en couches minces. Une étape de découpe des batteries élémentaires est ensuite réalisée. Avantageusement, le procédé présenté ici prévoit un enchaînement d'étapes réalisé à basses températures (inférieures à 300°C), ce qui est compatible avec la présence de couches en des matériaux composés de lithium réactifs et évite la dégradation de ces matériaux.

Les figures 2E et 2F illustrent des résultats d'étapes d'une première variante du procédé des figures 1A à 1E, ces étapes étant réalisées à partir de la structure de la figure 1D (étapes des figures 1A à 1C communes).

A l'étape illustrée en figure 2E, on a formé, sur la structure de la figure 1D, deux portions 44 et 46 d'une couche de préparation de surface pour connexion par bille de soudure connue sous l'appellation UBM ("Under Bump Metallization", UBM). La portion 44 est formée au niveau de l'ouverture 32 et sur une région de l'empilement 28/30 et la portion 46 est formée au niveau de l'ouverture 34 et sur une région de l'empilement 28/30. Pour former les deux portions 44 et 46, on pourra par exemple former une structure UBM sur l'ensemble du dispositif de la figure 1D puis graver cette structure de façon adaptée, par exemple par lithographie au travers d'un masque en résine.

De façon classique, chaque portion 44 et 46 est constituée d'un empilement de trois couches, la première permettant d'assurer l'adhérence sur la couche conductrice inférieure (16 ou 22), la deuxième formant barrière à la diffusion entre la couche conductrice inférieure et la troisième couche, et la troisième assurant l'adhésion de la brasure et améliorant la mouillabilité de celle-ci.

A l'étape illustrée en figure 2E, une bille de soudure 48, respectivement 49, est formée sur la portion UBM 44, respectivement 46. Les billes de soudure 48 et 49 peuvent être formées sur la structure de la figure 2F par tout procédé connu. A titre d'exemple, les billes de soudure 48 et 49 peuvent avoir un diamètre compris entre 200 et 250 µm.

Une encapsulation de la structure de la figure 2F peut ensuite être réalisée pour protéger et rigidifier l'ensemble. Une découpe des batteries élémentaires formées sur le substrat 10 est ensuite réalisée.

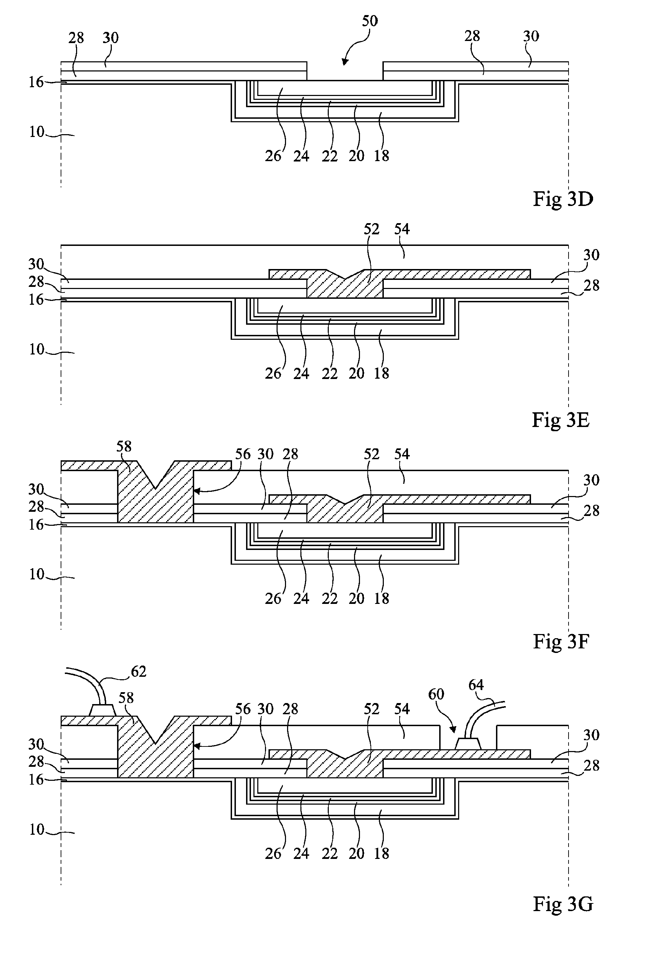

Les figures 3D à 3G illustrent des résultats d'étapes d'une seconde variante du procédé des figures 1A à 1E, ces étapes étant réalisées à partir de la structure de la figure 1C (étapes des figures 1A et 1B communes).

A l'étape illustrée en figure 3D, on a formé une couche de protection isolante sur l'ensemble du dispositif de la figure 1C. Dans l'exemple représenté, cette protection est constituée d'un empilement de deux couches 28 et 30, par exemple en des matériaux identiques à ceux décrits ci-dessus en relation avec la figure 1D.

Une ouverture traversante 50 est formée dans l'empilement 28/30, au-dessus d'une portion de la couche de collecteur d'anode 26. L'ouverture 50 permet de prendre contact sur la couche de collecteur d'anode 26. De préférence, l'ouverture 50 présente une largeur comprise entre 50 et 500 µm. A titre d'exemple, l'ouverture 50 peut être formée par lithographie, l'utilisation d'un tel procédé étant rendue possible du fait de la présence de l'empilement 28/30 de protection des couches actives de la batterie.

A l'étape illustrée en figure 3E, on a formé une métallisation 52 au niveau de l'ouverture 50 et sur une région de l'empilement 28/30. La métallisation 52 forme la reprise de contact sur la région de collecteur d'anode 26. A titre d'exemple, la métallisation 52 peut être en un empilement d'aluminium et de tantale, d'aluminium et de titane, ou encore d'aluminium et de nitrure de tantale. Sur l'ensemble du dispositif est ensuite déposée une couche de passivation isolante 54 recouvrant la métallisation 52, par exemple en oxyde de silicium ou en un alliage d'oxyde et de nitrure de silicium.

A l'étape illustrée en figure 3F, on a formé une ouverture traversante 56 dans la couche de passivation 52 et dans l'empilement 28/30, au-dessus d'une portion de la couche de collecteur de cathode 16, pour laisser apparaître cette couche. A titre d'exemple, l'ouverture 56 peut être formée par lithographie à l'aide d'un masque de résine.

Une métallisation 58 est ensuite formée au niveau de l'ouverture 56 et sur une région de la couche de collecteur de cathode 16. La métallisation 58 forme la reprise de contact sur la région de collecteur de cathode 16. Sur l'ensemble du dispositif est ensuite déposée une couche de passivation isolante, par exemple en oxyde de silicium ou en un empilement d'oxyde et de nitrure de silicium (non représentée). A titre d'exemple, la métallisation 58 peut être en un empilement d'aluminium et de tantale, d'aluminium et de titane, ou encore d'aluminium et de nitrure de tantale.

A l'étape illustrée en figure 3G, on a formé, dans la couche de passivation supérieure non représentée, une ouverture traversante pour former un contact 62 sur la métallisation de cathode 58. Une seconde ouverture traversante 60, formée dans la couche de passivation supérieure et dans la couche de passivation 54, permet la formation d'un contact 64 sur la métallisation 52.

Dans l'exemple représenté, les contacts 62 et 64 sont des contacts par fils (wire-bonding). On notera que l'on pourra également former des contacts 62 et 64 en forme de billes de soudure, les métallisations 52 et 58 étant alors remplacées par des empilements UBM.

Le procédé décrit dans la variante des figures 3D à 3G a l'avantage d'éviter la mise en court-circuit direct des deux électrodes de la batterie. Ainsi, si la batterie formée ne supporte pas un état initial en court-circuit, on préférera cette variante. Dans le cas inverse (batterie supportant une mise en court-circuit initial des électrodes), les procédés des figures 1A à 1E et 2D à 2F pourront être utilisés (mise en court-circuit des électrodes lors des étapes des figures 1E et 2E, avant la gravure de la couche conductrice 36/38 ou de l'UBM 44/46).

Des modes de réalisation particuliers de la présente invention ont été décrits. Diverses variantes et modifications apparaîtront à l'homme de l'art. En particulier, on notera que la structure initiale de la figure 1A pourra également être obtenue en déposant, sur un substrat isolant, une couche isolante présentant une épaisseur comprise entre 5 et 30 µm dans laquelle on forme une ouverture traversante.

De plus, on notera que les matériaux utilisés pour la formation de l'empilement actif de la batterie ne sont donnés ici qu'à titre d'exemple, et que tout matériau adapté à être déposé de façon conforme pourra être utilisé pour former ces couches.

## Revendications

1. Procédé de formation d'une batterie de type lithium-ion, comprenant les étapes successives suivante :
(a) former, dans un substrat (10), une tranchée (12) ;
(b) déposer successivement et de façon conforme, un empilement (14) comprenant une couche de collecteur de cathode (16), une couche de cathode (18), une couche d'électrolyte (20) et une couche d'anode (22), cet empilement ayant une épaisseur inférieure à la profondeur de la tranchée ;
(c) former, sur la structure, une couche de collecteur d'anode (26) remplissant l'espace restant dans la tranchée (12) ; et
(d) réaliser une planarisation de la structure pour faire apparaître la surface supérieure de la couche de collecteur de cathode (16).

2. Procédé selon la revendication 1, comprenant en outre, après l'étape (d) les étapes suivantes :
former une couche de protection (28, 30) sur la structure et définir, dans ladite couche de protection, une première ouverture traversante (32, 50) au-dessus de la couche de collecteur d'anode (26) et une seconde ouverture traversante (34, 56) au-dessus de la couche de collecteur de cathode (16) ; et
former des première (36, 44, 52) et seconde (38, 46, 58) régions conductrices, respectivement, dans la première ouverture et dans la seconde ouverture et sur une partie de la couche de protection.

3. Procédé selon la revendication 2, comprenant en outre une étape de formation d'un premier contact (40, 48, 64) sur la première région conductrice (36, 44, 52) et d'un second contact (42, 49, 62) sur la seconde région conductrice (38, 46, 58).

4. Procédé selon l'une quelconque des revendications 1 à 3, comprenant en outre, avant l'étape (c), une étape de formation d'une couche d'accrochage (24).

5. Procédé selon la revendication 4, dans lequel la couche de collecteur d'anode (26) est formée par croissance électrolytique à basse température sur la couche d'accrochage (24), la couche d'accrochage étant en un empilement de titane et de cuivre.

6. Procédé selon l'une quelconque des revendications 2 à 5, dans lequel le substrat (10) est en silicium ou en oxyde de silicium, la couche de collecteur de cathode (16) est en titane, en tungstène, en molybdène, en tantale, en platine ou en un alliage ou un empilement de ces matériaux, la couche de cathode (18) est en oxysulfure de titane et de lithium (LiTiOS) ou en oxyde de cobalt et de lithium (LiCoO₂) ou tout autre matériau d'insertion de lithium utilisable comme cathode dans les batteries de type lithium-ion, la couche d'électrolyte (20) est en oxynitrure phosphoré de lithium (LiPON), la couche d'anode (22) est en silicium, en germanium, en carbone ou en un empilement ou en un alliage de ces matériaux et la couche de collecteur d'anode (26) est en cuivre.

7. Procédé selon l'une quelconque des revendications 1 à 6, dans lequel la couche de collecteur de cathode (16), la couche de cathode (18), la couche d'électrolyte (20) et la couche d'anode (22) sont formées par pulvérisation en phase vapeur (PVD).

8. Procédé selon l'une quelconque des revendications 2 à 7, dans lequel la couche de protection est constituée d'un empilement d'une première couche (28) en une céramique, en Al₂O₃, en SiN, ou en ZrO₂ et d'une seconde couche (30) en SiO₂.

9. Procédé selon l'une quelconque des revendications 1 à 8, dans lequel la tranchée (12) a une profondeur comprise entre 5 et 30 µm, la couche de collecteur de cathode (16) a une épaisseur comprise entre 100 et 500 nm, la couche de cathode (18) a une épaisseur comprise entre 1 et 10 µm, la couche d'électrolyte (20) a une épaisseur comprise entre 1 et 3 µm et la couche d'anode (22) a une épaisseur comprise entre 10 et 800 nm.

10. Batterie de type lithium-ion, comprenant :
un substrat (10) comprenant une tranchée (12) ;
une couche de collecteur de cathode (16) le long des parois et du fond de la tranchée et sur le substrat ;
un empilement d'une couche de cathode (18), d'une couche d'électrolyte (20), d'une couche d'anode (22) et d'une couche de collecteur d'anode (26) formé le long des parois et du fond de la tranchée (12), sur la couche de collecteur de cathode (16), l'empilement remplissant la tranchée ; et
une couche de protection (28, 30) s'étendant sur la couche isolante et sur l'empilement, des première (32, 50) et seconde (34, 56) ouvertures traversantes étant formées dans ladite couche de protection, respectivement au-dessus de la couche de collecteur d'anode (26) et au-dessus de la couche de collecteur de cathode (16).

## Revendications modifiées

### Revendications modifiées conformément à la règle 137(2) CBE.

**10.** Batterie de type lithium-ion, comprenant :
un substrat (10) comprenant une tranchée (12) ;
une couche de collecteur de cathode (16) le long des parois et du fond de la tranchée et sur le substrat ;
un empilement d'une couche de cathode (18), d'une couche d'électrolyte (20), d'une couche d'anode (22) et d'une couche de collecteur d'anode (26) formé le long des parois et du fond de la tranchée (12), sur la couche de collecteur de cathode (16), l'empilement remplissant la tranchée ; et
une couche de protection (28, 30) s'étendant sur la couche de collecteur de cathode (16) et sur l'empilement, des première (32, 50) et seconde (34, 56) ouvertures traversantes étant formées dans ladite couche de protection, respectivement au-dessus de la couche de collecteur d'anode (26) et au-dessus de la couche de collecteur de cathode (16).
